# EUROPEAN PATENT SPECIFICATION

(11) **EP 1 738 867 B1**
(45) Date of publication and mention of the grant of the patent: **09.07.2008**
(21) Application number: 05022813.9
(22) Date of filing: 19.10.2005
(51) Int. Cl.: B23Q 11/08

(54) **Multi-link telescopic cover**
Mehrfach verbundene Teleskopabdeckung
Couvercle télescopique multiliaison

(30) Priority: 01.07.2005 US 171304
(43) Date of publication of application: 03.01.2007
(73) Proprietor: Keyarrow (Taiwan) Co., Ltd., Hsi-Tun Taichung City T'ai chung 407 (TW)
(72) Inventor: Wu, Yi-Chun, Taichung County 436 (TW)
(74) Representative: Becker Kurig Straus

(56) References cited:
- EP-A- 0 963 809
- SU-A1- 1 154 073
- TW-A- 152 342

## Description

### BACKGROUND OF THE INVENTION

### 1. Field of the Invention

The present invention relates generally to a dust-proof device for a machine tool, and more particularly to a multi-link telescopic cover, according to the preamble of claim 1, as for example known from EP-A-0 963 803.

### 2. Description of the Related Art

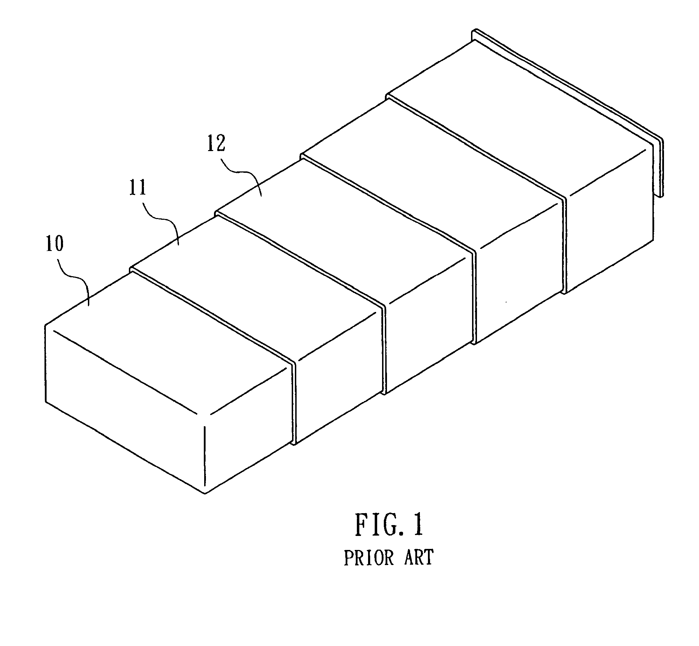

FIG. 1 shows a conventional dust-proof cover including shield plates 10, 11, 12... with various sizes, which are fitted in sequence. To extend the dust-proof cover, the first shield plate 10 is drawn to draw the second shield plate 11, and then the second shield plate 11 draws the third shield plate 12.... The shield plates of the conventional dust-proof cover move asynchronously in extension and telescoping that causes the drawbacks hereunder:
1. The shield plates makes loud noise when extension and telescoping. The shield plates impact each other when the large shield plate is moved quickly that causes the shield plates shifting.
2. To avoid the noise, the dust-proof cover is provided with plastic blocks for damping. The blocks are damaged by oil or cutting liquid of the machine tool or by the impact of the shield plates.
3. The impact causes the shield plates tilted, so that the dust-proof cover is curved in extension condition. After a time of use, the shield plates may be collapsed.

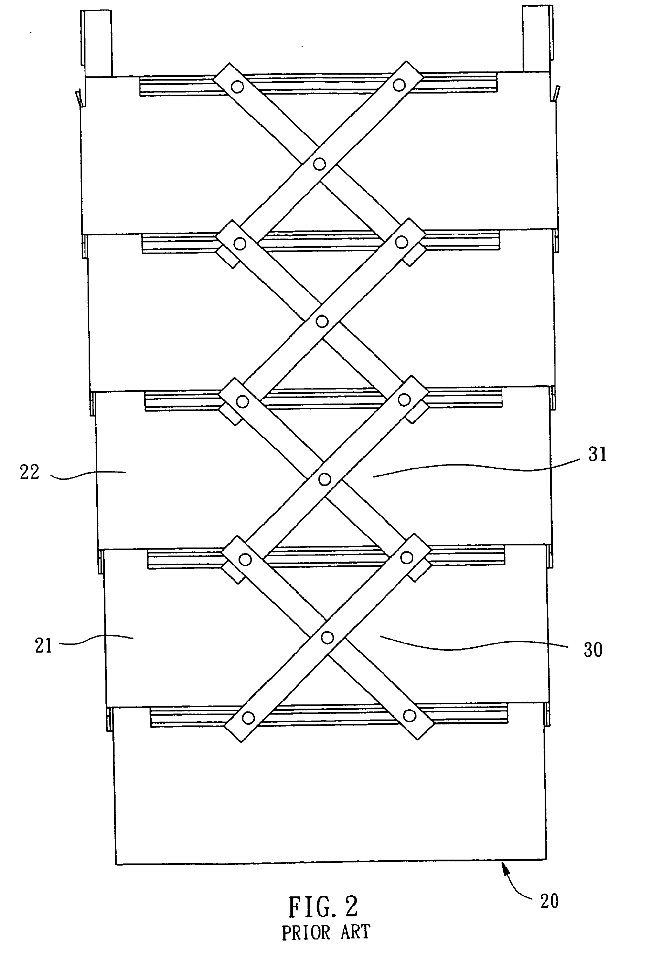

FIG. 2 shows an improved dust-proof cover, which has shield plates 20, 21, 22... and a set of link assemblies 30, 31... pivoted on the shield plates respectively. In extension of the dust-proof cover, the first shield plate 20 is drawn to move the second shield plate 21 via the first link assembly 30, and then the second shield plate 21 moves the third shield plate 22 via the second link assembly 31.... This dust-proof cover has several drawbacks.

In mechanical principle, the distance of the movement of each shield plate is identical to the angle of swing of the corresponding linkages. In manufacture, there must be tolerances between the linkages and between the linkages and the slide ways, so called liberal allowance to move the shield plates smoothly. As a result, the angle of swing of the linkages on the first shield plate is different from that of on the last shield plate. The difference of the angle of the swing of the linkages is greater when the number of the shield plates is greater. In other words, the shield plates still move asynchronously and still are curved.

The link assemblies also have problem of shifting left or shifting right, so that it still has to be improved.

### SUMMARY OF THE INVENTION

According to the present invention there is provided a multi-link telescopic cover according to claim 1.

### BRIEF DESCRIPTION OF THE DRAWINGS

FIG. 1 is a perspective view of the first conventional telescopic cover;
FIG. 2 is a bottom view of the cylinder of the second conventional telescopic cover;
FIG. 3 is a perspective view of the link assembly of a first preferred embodiment of the present invention;
FIG. 4 is a bottom view of the first preferred embodiment of the present invention in the telescoped condition;

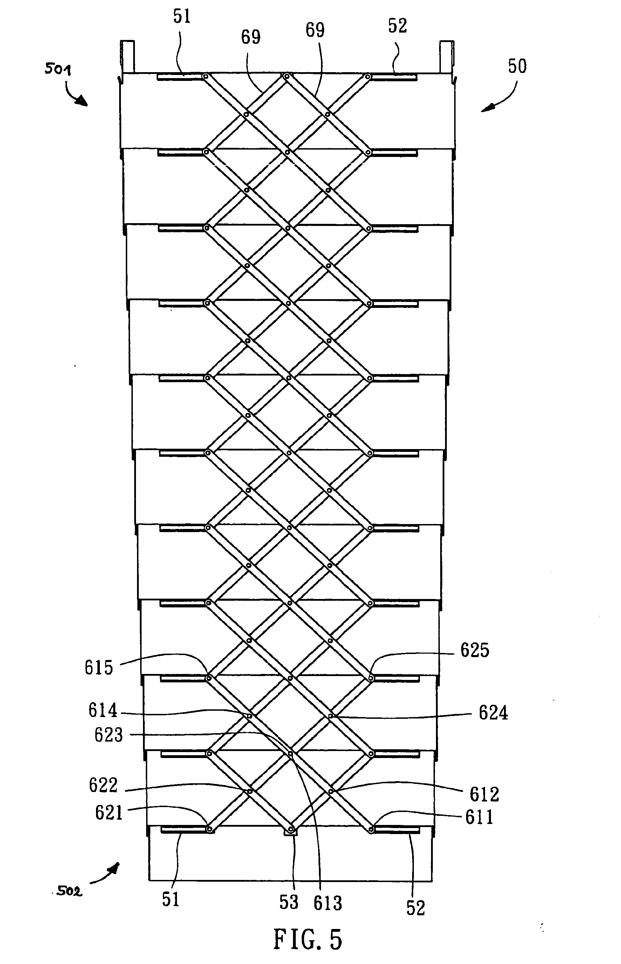

FIG. 5 is a bottom view of the first preferred embodiment of the present invention in the extended condition;
FIG. 6 is a bottom view of a second preferred embodiment of the present invention, and
FIG. 7 is a bottom view of a third preferred embodiment of the present invention.

### DETAILED DESCRIPTION OF THE INVENTION

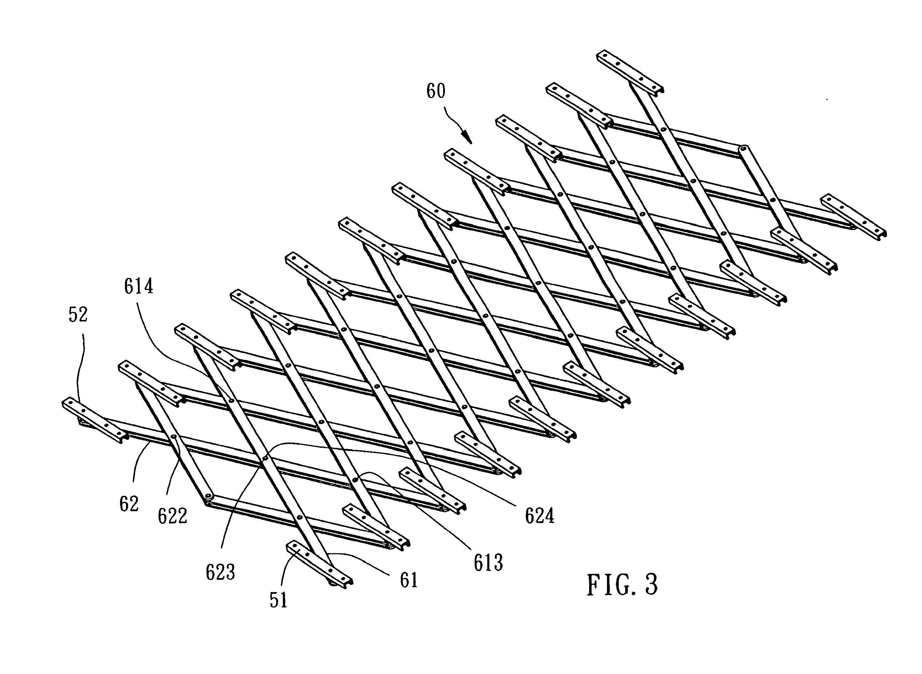

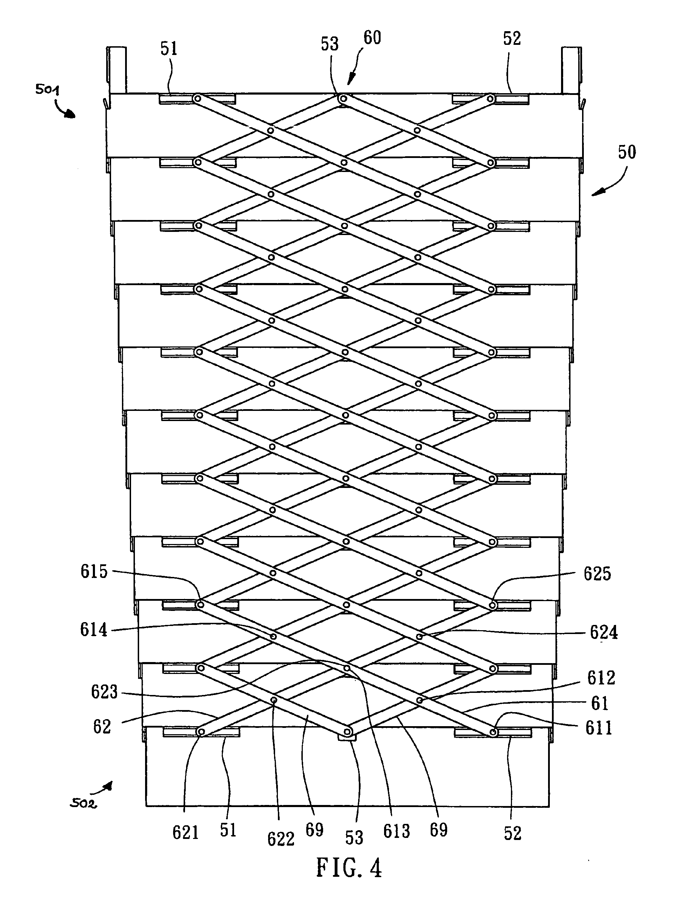

As shown in FIG. 3 and FIG. 4, a multi-link telescopic cover of the first preferred embodiment of the present invention comprises:

A cover assembly 50 is consisted of eleven shield plates, which are same in aspects and various in sizes. The shield plates are fitted in sequence to be extended and telescoped along a telescopic orientation. The cover assembly 50 has a first end with the greatest shield plate and a second end with the smallest shield plate. Each of the shield plates has three pivot portions, which are a left slide way 51, a right slide way 52 and a pivot 53 between the slide ways 51 and 52. The slide ways 51 and 52 have orientations particular to a direction of the shield plates extending and telescoping.

A link assembly 60 includes nine first linkages 61, nine second linkages 62 and four third linkages 69. The first linkages 61 and the second linkages 62 are two sets of parallel linkages, which are tilted to opposite directions respectively. Two of the third linkages 69 have an end pivoted on the pivot 53 of the first shield plate and an end jointed with the left and right slide ways 51 and 52 of the second shield plate. The other two of the third linkages 69 are pivoted on the eleventh shield plate and the tenth shield plate symmetrically. Each of the first and second linkages 61 and 62 has five pivot portions 611, 612, 613, 614, 615, 621, 622, 623, 624 and 625 from an end to the other end of the linkage. The first pivot portions 611 of the first linkages 61 are jointed with the left slide ways 51 of the first shield plate to that of the ninth shield plate, and the fifth pivot portions 615 of the first linkages 61 are jointed with the right slide ways 52 of the third shield plate to that of the eleventh shield plate. The first pivot portions 621 of the second linkages 62 are jointed with the right slide ways 52 of the first shield plate to that of the ninth shield plate, and the fifth pivot portions 625 of the second linkages 61 are jointed with the left slide ways 51 of the third shield plate to that of the eleventh shield plate. The third pivot portions 613, 623 of the first linkages 61 and the second linkages 62 are pivoted on the pivots 53 of the second shield plate to that of the tenth shield plate respectively. The second pivot portions 612 of the first linkages 61 are jointed with the third linkage 69 and the fourth pivot portions 624 of the second linkages 62 respectively, and the fourth pivot portions 614 of the first linkages 61 are jointed with the third linkage 69 and the second pivot portions 622 of the second linkages 62 respectively.

Each of the first and second linkages 61 and 62 connect three of the neighboring shield plates, in other words, the first, second and third shield plates move synchronously, and the second, third and fourth shield plates move synchronously.... As a result, when the first shield plate is drawn or pushed, the rest of the shield plates of the cover assembly 50 are moved synchronously with the first shield plate. The power transmission of the shield plates of the cover assembly 50 of the present invention is identical, synchronous and overlapped that increases the synchronism and parallel degree of the shield plates and decreases the impact between the shield plates. As a result, there is no need for the damping block as the conventional device provided to eliminate impact and noise, and no need for the fee of replacement and maintenance of the damping blocks.

When extension or telescoping of the shield plates of the cover assembly 50, each of the shield plates is moved by two sets of three parallel forces provided by the linkages (the conventional device only has single or two parallel forces) that decreases the shield plates shaking in movement. As a result, the shield plates of the cover assembly 50 moves in a straight and smooth motion without tilting and twisting.

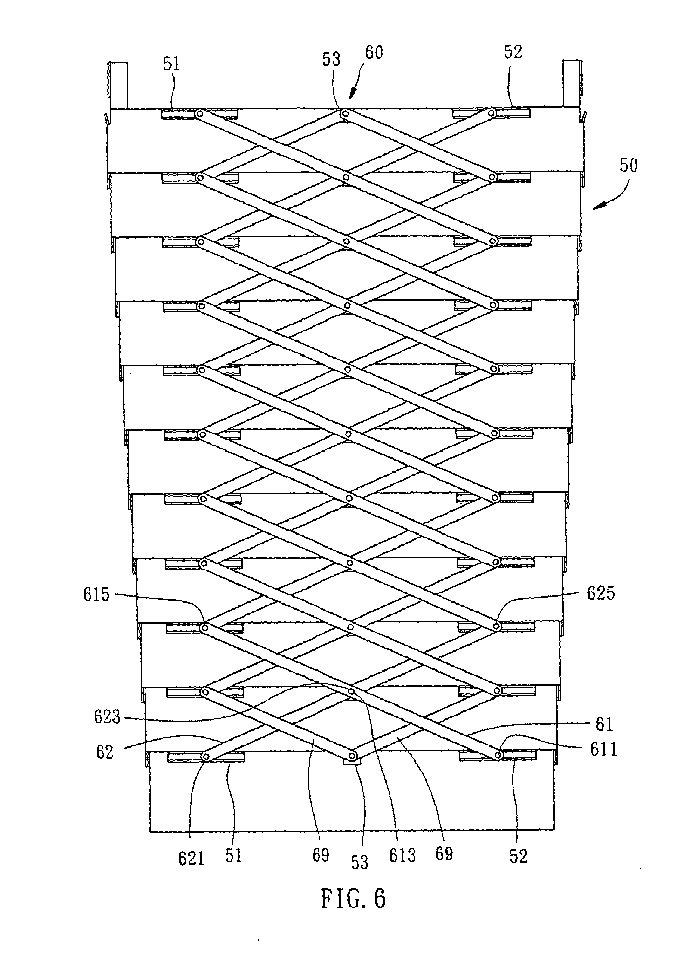

FIG. 6 shows a multi-link telescopic cover of the second preferred embodiment of the present invention, which is similar to the telescopic cover of the first preferred embodiment, except that there is no second and fourth pivot portion on the first and second linkages 61 and 62.

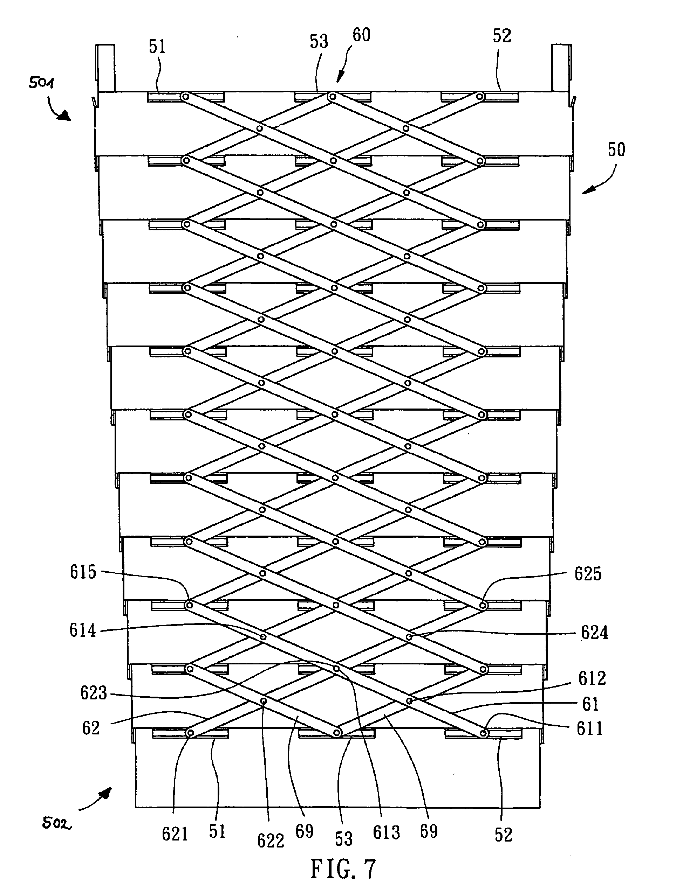

FIG. 7 shows a multi-link telescopic cover of the third preferred embodiment of the present invention, which is similar to the telescopic cover of the first preferred embodiment, except that the middle pivot portions 53 on the shield plates are slide ways, with which the third pivot portions 613 and 623 of the first and second linkages 61 and 62 are engaged. There is a restriction mechanism in the slide ways respectively that serve the same function as above.

## Claims

1. A multi-link telescopic cover, comprising a cover assembly (50), which has a plurality of shield plates fitted in sequence, which are same in aspect but gradually decrease in size to be extended and telescoped, wherein the cover assembly (50) has a first end (501) and a second end (502), and a link assembly (60) having a set of parallel first linkages (61) and a set of parallel second linkages (62), wherein the first linkages (61) and the second linkages (62) are crosswise respectively,
**characterized in that**,
each of the shield plates of the cover assembly has a right pivot portion (52) and a middle pivot portion (53) and a left pivot portion (51), wherein the right pivot portions (52) and the left pivot portions (51) of the shield plates are slide ways;
each of the first linkages (61) and second linkages (62) has five pivot portions (611, 612,613,614,615,621,622,623,624,625);
the first linkages (61) of the link assembly (60) having first ends pivoted on the left pivot portions (51) of the first shield plate from the first end (501) of the cover assembly (50) to the third shield plate from the second end (502) of the cover assembly (50) respectively, and having second ends pivoted on the right pivot portions (52) of the third shield plate from the first end (501) of the cover assembly (50) to the first shield plate from the second end (502) of the cover assembly (50) respectively, and having middles pivoted on the middle pivot portions (53) of the second shield plate from the first end (501) of the cover assembly (50) to the second shield plate from the second end (502) of the cover assembly (50) respectively;
the second linkages (62) of the link assembly (60) having first ends pivoted on the right pivot portions (52) of the first shield plate from the first end (501) of the cover assembly (50) to the third shield plate from the second end (502) of the cover assembly (50) respectively, and having second ends pivoted on the left pivot portions (51) of the third shield plate from the first end (501) of the cover assembly (50) to the first shield plate from the second end (502) of the cover assembly (50) respectively, and having a middle pivoted on the middle pivot portions (53) of the second shield plate from the first end (501) of the cover assembly (50) to the second shield plate from the second end (502) of the cover assembly (50) respectively; and
the first linkages (61) are jointed with the second linkages (62) where the first linkages (61) and the second linkages (62) are across except the first ends, the second ends and the middles of the first linkages (61) and the second linkages (62).

2. The multi-link telescopic cover as defined in claim 1, wherein the link assembly (60) further comprise four short linkages (69) having ends pivoted on the middle pivot portions (53) of the first shield plate from the first end (501) and from the second end (502) and the right pivot portions (52) and the left pivot portions (51) and the right pivot portions (52) of the second shield plates from the first end (501) and from the second end (502) respectively.

3. The multi-link telescopic cover as defined in claim 1, wherein the middle pivot portions (53) of the shield plates are slide ways, in which the middles of the first linkages (61) and the second linkages (62) are slide.

## Patentansprüche

1. Mehrfach verbundene Teleskopabdeckung, umfassend eine Abdeckungsanordnung (50) mit mehreren Schildplatten, die in Reihe eingepasst und im Aussehen gleich sind, sich aber stufenweise verkleinern, damit sie ausgefahren und teleskopisiert werden können, wobei die Abdeckungsanordnung (50) ein erstes Ende (501) und ein zweites Ende (502) und eine Verbindungsanordnung (60) aufweist, die einen Satz paralleler erster Verbindungen (61) und einen Satz paralleler zweiter Verbindungen (62) aufweist, wobei die ersten Verbindungen (61) und die zweiten Verbindungen (62) jeweils quergerichtet sind,
**dadurch gekennzeichnet, dass**
jede der Schildplatten der Abdeckungsanordnung ein rechtes Drehteil (52) und ein mittleres Drehteil (53) und ein linkes Drehteil (51) aufweist, wobei die rechten Drehteile (52) und die linken Drehteile (51) der Schildplatten Gleitschienen sind;
jede der ersten Verbindungen (61) und der zweiten Verbindungen (62) fünf Drehteile (611, 612, 613, 614, 615, 621, 622, 623, 624, 625) aufweist;
die ersten Verbindungen (61) der Verbindungsanordnung (60) erste Enden aufweisen, die jeweils an den linken Drehteilen (51) der ersten Schildplatte von dem ersten Ende (501) der Abdeckungsanordnung (50) bis zur dritten Schildplatte von dem zweiten Ende (502) der Abdeckungsanordnung (50) drehbar gelagert sind, und zweite Enden aufweisen, die jeweils an den rechten Drehteilen (52) der dritten Schildplatte von dem ersten Ende (501) der Abdeckungsanordnung (50) bis zur ersten Schildplatte von dem zweiten Ende (502) der Abdeckungsanordnung (50) drehbar gelagert sind, und Mitten aufweisen, die jeweils an den mittleren Drehteilen (53) der zweiten Schildplatte von dem ersten Ende (501) der Abdeckungsanordnung (50) bis zu der zweiten Schildplatte von dem zweiten Ende (502) der Abdeckungsanordnung (50) schwenkbar gelagert sind;
die zweiten Verbindungen (62) der Verbindungsanordnung (60) erste Enden aufweisen, die jeweils an den rechten Drehteilen (52) der ersten Schildplatte von dem ersten Ende (501) der Abdeckungsanordnung (50) bis zur dritten Schildplatte von dem zweiten Ende (502) der Abdeckungsanordnung (50) drehbar gelagert sind, und zweite Enden aufweisen, die jeweils an den linken Drehteilen (51) der dritten Schildplatte von dem ersten Ende (501) der Abdeckungsanordnung (50) bis zur ersten Schildplatte von dem zweiten Ende (502) der Abdeckungsanordnung (50) drehbar gelagert sind, und eine Mitte aufweisen, die an den mittleren Drehteilen (53) der zweiten Schildplatte von dem ersten Ende (501) der Abdeckungsanordnung (50) bis zu der zweiten Schildplatte von dem zweiten Ende (502) der Abdeckungsanordnung (50) drehbar gelagert ist, und
wobei die ersten Verbindungen (61) mit den zweiten Verbindungen (62) dort aneinander gefügt sind, wo die ersten Verbindungen (61) sich mit den zweiten Verbindungen (62) kreuzen, mit Ausnahme der ersten Enden, der zweiten Enden und der Mitten der ersten Verbindungen (61) und der zweiten Verbindungen (62).

2. Mehrfach verbundene Teleskopabdeckung nach Anspruch 1, wobei die Verbindungsanordnung (60) weiterhin vier kurze Verbindungen (69) umfasst, die Enden aufweisen, die an den mittleren Drehteilen (53) der ersten Schildplatte von dem ersten Ende (501) und von dem zweiten Ende (502) und an die rechten Drehteile (52) und die linken Drehteile (51) und an die rechten Drehteile (52) der zweiten Schildplatten von dem ersten Ende (501) und von dem zweiten Ende (502) jeweils drehbar gelagert sind.

3. Mehrfach verbundene Teleskopabdeckung nach Anspruch 1, wobei die mittleren Drehteile (53) der Schildplatten Gleitschienen sind, in denen die Mitten der ersten Verbindungen (61) und der zweiten Verbindungen (62) Gleiter sind.

## Revendications

1. Un couvercle télescopique multi liaison comprenant un assemblage de couvercles (50) qui comporte une pluralité de plateaux de bouclier ajustés en séquence qui ont le même aspect mais qui décroissent graduellement en taille pour être allongés et emboîtés, dans lequel l'assemblage de couvercles (50) comporte une première extrémité (501) et une seconde extrémité (502) et un assemblage de tringles (60) comportant un ensemble de premières tringles parallèles (61) et un ensemble de secondes tringles parallèles (62) dans lequel les premières tringles (61) et les secondes tringles (62) sont respectivement en diagonale,
**caractérisé en ce que**
chacun des plateaux de bouclier de l'assemblage de couvercles comporte une portion pivot de droite (52) et une portion pivot médiane (53) et une portion pivot de gauche (51) dans lequel les portions pivot de droite (52) et les portions pivot de gauche des couvercles de bouclier sont des glissières ;
chacune des premières tringles (61) et secondes tringles (62) comporte cinq portions de pivot (611, 621, 613, 614, 615, 621, 622, 623, 624, 625) ;
les premières tringles (61) de l'assemblage de tringles (60) comportant des premières extrémités montées pivotantes sur les portions pivot de gauche (51) du premier plateau de bouclier à partir de la première extrémité (501) de l'assemblage de couvercles (50) respectivement jusqu'au troisième plateau de bouclier de la seconde extrémité (502) de l'ensemble de couvercles (50), et comportant des secondes extrémités montées pivotantes sur les portions pivot de droite (52) du troisième plateau à partir de la première extrémité (501) de l'assemblage de couvercles (50) respectivement jusqu'au premier plateau de bouclier à partir de la seconde extrémité (502) de l'assemblage de couvercles (50), et comportant des parties médianes montées pivotantes sur les portions pivot médianes (53) du second plateau de bouclier à partir de la première extrémité (501) de l'assemblage de couvercles (50) respectivement jusqu'au second plateau de bouclier de la seconde extrémité (502) de l'assemblage de couvercles (50);
les secondes tringles (62) de l'assemblage de tringles (60) comportant des premières extrémités montées pivotantes sur les portions pivot de droite (52) du premier plateau de bouclier de la première extrémité (501) de l'assemblage de couvercles (50) respectivement jusqu'au troisième plateau de bouclier de la seconde extrémité (502) de l'assemblage de couvercles (50), et comportant des secondes extrémités montées pivotantes sur les portions pivot de gauche (51) du troisième plateau de bouclier de la première extrémité (501) de l'assemblage de couvercles (50) respectivement jusqu'au premier plateau de bouclier à partir de la seconde extrémité (502) de l'assemblage de couvercles (50), et comportant une partie médiane monté pivotante sur les portions pivot médianes (53) du second plateau de bouclier à partir de la première extrémité (501) de l'assemblage de couvercles (50) respectivement jusqu'au second plateau de bouclier de la seconde extrémité (502) de l'assemblage de couvercles (50); et
les premières tringles (61) sont jointes avec les secondes tringles (62) lorsque les premières tringles (61) et les secondes tringles (62) sont croisées, à l'exception des premières extrémités, des secondes extrémités et des parties médianes des premiers liens (61) et des seconds liens (62).

2. Le couvercle télescopique multi liaison tel que défini dans la revendication 1 dans lequel l'ensemble de tringles (60) comprend en outre quatre tringles courtes (69) comportant des extrémités montées pivotantes sur les portions pivot médianes (53) du premier plateau de bouclier à partir de la première extrémité (501) et à partir de la seconde extrémité (502), et les portions pivot de droite (52) et les portions pivot de gauche (51) et les portions pivot de droite (52) du second plateau écran respectivement à partir de la première extrémité (501) et à partir de la seconde extrémité (502).

3. Le couvercle télescopique multi liaison tes que défini dans la revendication 1 dans lequel les portions pivot médianes (53) des plateaux de bouclier sont des glissières dans lesquelles glissent les parties médianes des premières tringles (61) et des secondes tringles (62).
